# EUROPEAN PATENT APPLICATION

(11) **EP 2 560 405 A1**
(43) Date of publication of application: **20.02.2013**
(21) Application number: 12180677.2
(22) Date of filing: 16.08.2012
(51) Int. Cl.: H04N 21/439, H04N 21/81

(54) **Digital broadcast reception device**

(30) Priority: 19.08.2011 JP 2011179396
(71) Applicant: Funai Electric Co., Ltd., Daito-shi Osaka 574-0013 (JP)
(72) Inventor: Iwanaga, Akihiro, Daito-shi, Osaka 574-0013 (JP)
(74) Representative: Grünecker, Kinkeldey, Stockmair & Schwanhäusser

(57) **Abstract**

A digital broadcast reception device, provided with a first audio decoder for expanding and outputting a compressed digital audio signal included in the transport stream of a received digital broadcast; an encoder for encoding at least the digital audio signal outputted by the first audio decoder; and a second audio decoder for decoding the compressed digital audio signal outputted by the encoder.

## Description

### BACKGROUND OF THE INVENTION

### 1. Field of the Invention

The present invention relates to a digital broadcast reception device for receiving a digital broadcast.

### 2. Description of Related Art

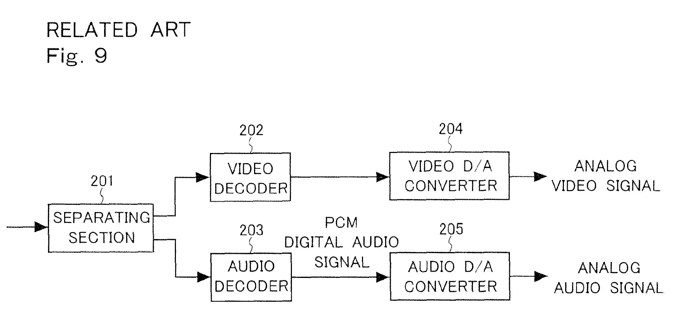

A digital broadcast reception device for receiving a digital broadcast is provided with a video/audio processor for processing the transport stream of the received digital broadcast. Herein, a simplified configuration example of a video/audio processor provided to a typical digital broadcast receiver device is shown in Fig. 9.

The video/audio processor shown in Fig. 9 is provided with a separating section 201 for separating the transport stream of the received digital broadcast into a compressed digital video signal, a compressed digital audio signal, etc.; a video decoder 202 for expansion and output of the compressed digital video signal sent to it by the separating section 201; an audio decoder 203 for expansion and output of the compressed digital audio signal sent to it by the separating section 201; a video D/A converter 204 for D/A conversion of the digital video signal outputted by the video decoder 202, and output of an analog video signal; and an audio D/A converter 205 for D/A conversion of a pulse code modulation (PCM) digital audio signal, which is the digital audio signal outputted by the audio decoder 203, and output of an analog audio signal.

From the video/audio processor shown in Fig. 9, it will be appreciated that the output analog audio signal retains the same level as that intended by the broadcaster.

Meanwhile, multiple channels and higher dynamic ranges are trends that are associated with digitization of broadcasts, and there are sometimes large differences in volume among different broadcast programs, among different channels, between the main part of a broadcast program and a commercial (hereinafter sometimes denoted as CM), and so on. Despite the fact that the analog audio signal outputted by the video/audio processor retains the same level as that intended by the broadcaster, if such differences in volume occur frequently, the user will be compelled to constantly make adjustments of the volume, which is inconvenient for the user.

Accordingly, in Japanese Laid-Open Patent Application 2008-41144, there was proposed a content recording device adapted to receive compressed content over a network, and to record the received content into storage means, the content recording device being equipped with decoding means for decoding the content; volume level adjusting means for adjusting the volume of the content decoded by the decoding means to an established baseline volume level; and encoding means for encoding the content that has been adjusted to the baseline volume level by the volume level adjusting means, doing so at an established baseline compression ratio, wherein the content encoded at the baseline compression ratio by the encoding means is recorded into the storage means.

Additionally, Japanese Laid-Open Patent Application 2002-112173 discloses a recording/playback device adapted to record an input audio signal into a recording medium, and to play it back, the recording/playback device being provided with volume varying means capable of varying the volume of an output audio signal relative an input audio signal, detecting means for detecting that an input audio signal is a commercial signal, and audio control means that, in a case in which a commercial signal has been detected by the detecting means, controls the volume varying means to vary the volume of the audio signal.

With the devices disclosed in Japanese Laid-Open Patent Application 2008-41144 and Japanese Laid-Open Patent Application 2002-112173, the amount of labor expended by the user in making volume adjustments can be reduced by actual automatic adjustment of the volume. However, because an adjusting section is necessary to make the actual automatic adjustments of the volume, there are limitations in terms of the configuration.

An information processing device proposed in Japanese Laid-Open Patent Application 2009-49474, which can adjust the bit rate according to the degree of importance of a scene, is furnished with a volume detecting section that in a case in which, for example, the volume of cheering has been detected, and an evaluation value has been established based on the percentage of the volume of the cheering, can detect the volume of the cheering. As such, the invention relates to volume, but cannot reduce the amount of labor expended by the user in making volume adjustments.

### SUMMARY OF THE INVENTION

It is an object of the present invention to offer a digital broadcast reception device that can reduce the amount of effort expended by the user in making volume adjustments, despite not being furnished with an adjusting section for making actual automatic adjustments of volume.

In order to achieve the aforementioned object, the digital broadcast reception device according to the present invention comprises a first audio decoder for expanding and outputting a compressed digital audio signal included in a transport stream of a received digital broadcast;
an encoder for encoding at least the digital audio signal outputted by the first audio decoder; and
a second audio decoder for decoding the compressed digital audio signal outputted by the encoder.

Optionally, the device comprises an audio D/A convertor for D/A conversion of the digital audio signal outputted by the second audio decoder, and outputting an analog audio signal.

Optionally, the encoder is an encoder that can modify the bit rate of audio encoding. In this case, the encoder modifies the bit rate of audio encoding so as to be smaller subsequent to modification than prior to modification in a case in which a switch from the main part of a broadcast program to a commercial has detected, and the difference in volume between the main part and the commercial is equal to or greater than a threshold.

Optionally, the device is provided with a bypass route bypassing the encoder and the second audio decoder. In this case, the bypass route is switched from a state of use to a state of non-use in a case in which a switch from a main part of a broadcast program to a commercial has been detected, and a difference in volume between the main part and the commercial is equal to or greater than a threshold.

### BRIEF DESCRIPTION OF THE DRAWINGS

Fig. 1 is a diagram showing a simplified configuration of an HDD-equipped optical disc recorder according to an embodiment of the present invention;

Fig. 2 is a diagram showing a simplified example configuration of a video/audio processor provided to an HDD-equipped optical disc recorder according to an embodiment of the present invention;

Fig. 3 is a diagram showing another simplified example configuration of a video/audio processor provided to an HDD-equipped optical disc recorder according to an embodiment of the present invention;

Fig. 4 is a diagram showing yet another simplified example configuration of a video/audio processor provided to an HDD-equipped optical disc recorder according to an embodiment of the present invention;

Fig. 5 is a flowchart showing an example of operation of a video/audio processor;

Fig. 6 is a flowchart showing another example of operation of a video/audio processor;

Fig. 7 is a diagram showing a simplified example configuration of a video/audio processor having a bypass route, provided to an HDD-equipped optical disc recorder according to an embodiment of the present invention;

Fig. 8 is a flowchart showing an example of operation of a video/audio processor having a bypass route; and

Fig. 9 is a diagram showing a simplified example configuration of a video/audio processor provided to an ordinary digital broadcast reception device.

### DETAILED DESCRIPTION OF PREFERRED EMBODIMENTS

The embodiments of the present invention are described below with reference to the accompanying drawings. The example of the digital broadcast reception device according to the present invention described herein is that of a hard disk drive (HDD)-equipped optical disc recorder.

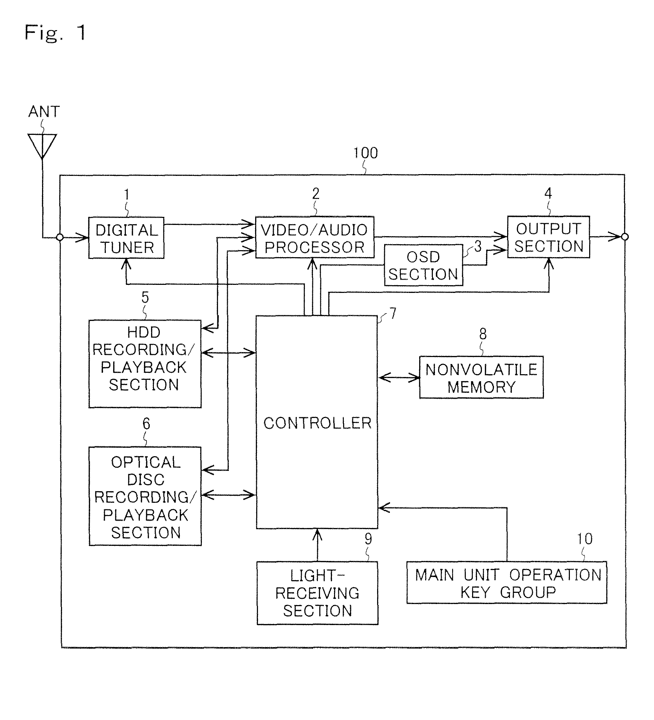

A simplified configuration of an HDD-equipped recorder according to an embodiment of the present invention is shown in Fig. 1. The HDD-equipped optical disc recorder 100 according to the embodiment of the present invention shown in Fig. 1 (hereinafter abbreviated to "HDD-equipped optical disc recorder 100") is provided with a digital tuner 1, a video/audio processor 2, an on-screen display (OSD) section 3, an output section 4, an HDD recording/playback section 5, an optical disc recording/playback section 6, a controller 7, a nonvolatile memory 8, a light-receiving section 9, and a main unit operation key group 10.

The digital tuner 1 performs selection and demodulation (for example, orthogonal frequency division multiplexing (OFDM) demodulation) of a TV broadcast signal received by an antenna ANT. The video/audio processor 2 performs signal processing of a video/audio signal included in the transport stream received from the digital tuner 1, or of a video/audio signal played back by the HDD recording/playback section 5 or the optical disc recording/playback section 6, and sends it to the output section 4; or sends a video/audio signal included in the transport stream received from the digital tuner 1 to the HDD recording/playback section 5 or the optical disc recording/playback section 6. The OSD section 3 sends OSD image data generated based on an instruction from the controller 7 to the output section 4. The output section 4 outputs to the outside a synthesized video signal synthesized from the analog video signal received from the video/audio processor 2 and the OSD image data received from the OSD section 3; directly outputs the analog video signal received from the video/audio processor 2 to the outside without performing the aforementioned synthesis process; directly outputs the OSD image data received from the OSD section 3 to the outside without performing the aforementioned synthesis process; or outputs to the outside an analog audio signal received from the video/audio processor 2. The output signal of the output section 4 is transmitted to a television receiver (not shown) connected to the HDD-equipped optical disc recorder 100. The television receiver connected to the HDD-equipped optical disc recorder 100 displays images and outputs audio based on the output signal of the output section.

The HDD recording/playback section 5 records onto a hard disk a video/audio signal received from the video/audio processor 2, or plays back a video/audio signal that has been recorded onto the hard disk. The optical disc recording/playback section 6 records onto an optical disc a video/audio signal received from the video/audio processor 2, or plays back a video/audio signal that has been recorded onto an optical disc. The optical disc is removably installed in the optical disc recording/playback section 6.

The light-receiving section 9 receives a remote control infrared signal transmitted by a remote control transmitter (not shown) and converts it to an electrical signal, then extracts an operation code from the electrical signal, for output to the controller 7. The controller 7 controls the various sections of the HDD-equipped optical disc recorder 100, in response to a control program and various settings (for example, a data table containing associations between operation codes and various functions, or the like) stored in the nonvolatile memory 8, to an operation code received from the light-receiving section 9, and to an operation code defined by a signal output from the main unit operation key group 10, which has a plurality of main unit keys.

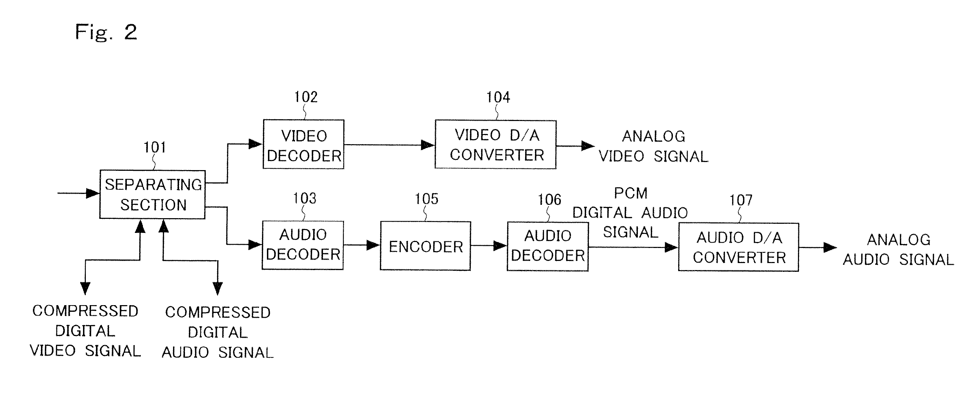

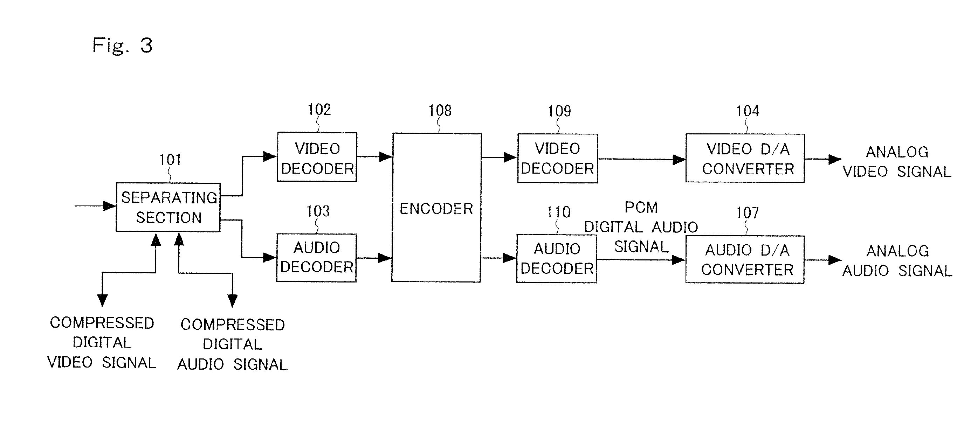

Next, the video/audio processor 2 provided to the HDD-equipped optical disc recorder 100 is configured as shown in Fig. 2, or configured as shown in Fig. 3, for example.

In the configuration shown in Fig. 2, the video/audio processor 2 is provided with a separating section 101 for separating the transport stream of a received digital broadcast into a compressed digital video signal, a compressed digital audio signal, etc.; a video decoder 102 for expansion and output of the compressed digital video signal sent to it by the separating section 101; an audio decoder 103 for expansion and output of the compressed digital audio signal sent to it by the separating section 101; a video D/A converter 104 for D/A conversion of the digital video signal outputted by the video decoder 102, and output of an analog video signal; an encoder 105 for encoding a PCM digital audio signal, which is the digital audio signal outputted by the audio decoder 103; an audio decoder 106 for decoding the compressed digital audio signal outputted by the encoder 105; and an audio D/A converter 107 for D/A conversion of the PCM digital audio signal which is the digital audio signal outputted by the audio decoder 106, and output of an analog audio signal. The encoder 105 is an encoder that can modify the bit rate of encoding.

In the configuration shown in Fig. 3, in place of the encoder 105 in the configuration shown in Fig. 2, the configuration is furnished instead with an encoder 108 for encoding the digital video signal outputted by the video decoder 102 and the digital audio signal outputted by the audio decoder 103; additionally furnished with a video decoder 109 between the encoder 108 and the video D/A converter 104; and also furnished with an audio decoder 110 between the encoder 108 and the audio D/A converter 107. Consequently, with the configuration shown in Fig. 3, the encoder 108 encodes the digital video signal outputted by the video decoder 102 and the digital audio signal outputted by the audio decoder 103; the video decoder 109 decodes the compressed digital video signal outputted by the encoder 108; the audio decoder 110 decodes the compressed digital audio signal outputted by the encoder 108; the video D/A converter 104 performs D/A conversion of the digital video signal outputted by the video decoder 109, and outputs an analog video signal; and the audio D/A converter 107 performs D/A conversion of the PCM digital audio signal, which is the digital audio signal outputted by the audio decoder 110, and outputs an analog audio signal. The encoder 108 is an encoder that can modify the bit rate of audio encoding.

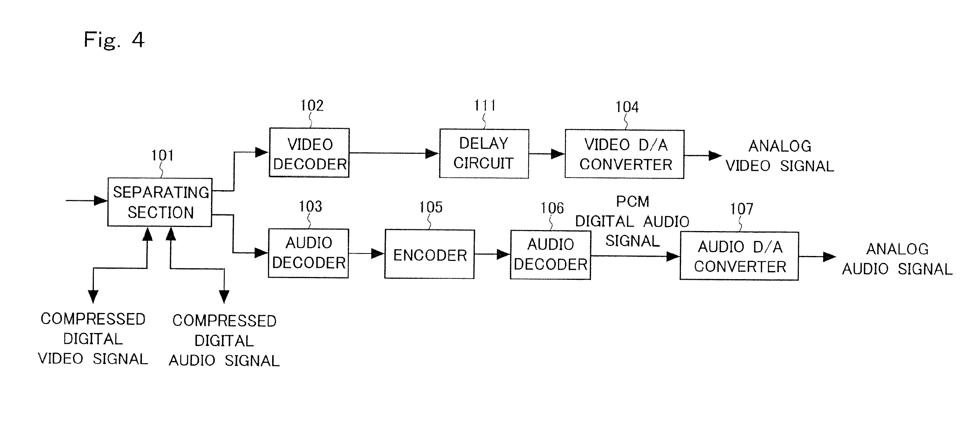

With the configuration shown in Fig. 3, because the encoder 108 processes the video signal and the audio signal simultaneously, no lag arises between the analog video signal and the analog audio signal. In contrast to this, with the configuration shown in Fig. 2, when the processing time of the encoder 105 and the audio decoder 106 is prolonged, the analog audio signal will be delayed with respect to the analog video signal. Consequently, in cases of prolonged processing time of the encoder 105 and the audio decoder 106, a delay circuit 111 may be furnished between the video decoder 102 and the video D/A converter 104, as in the configuration shown in Fig. 4 for example.

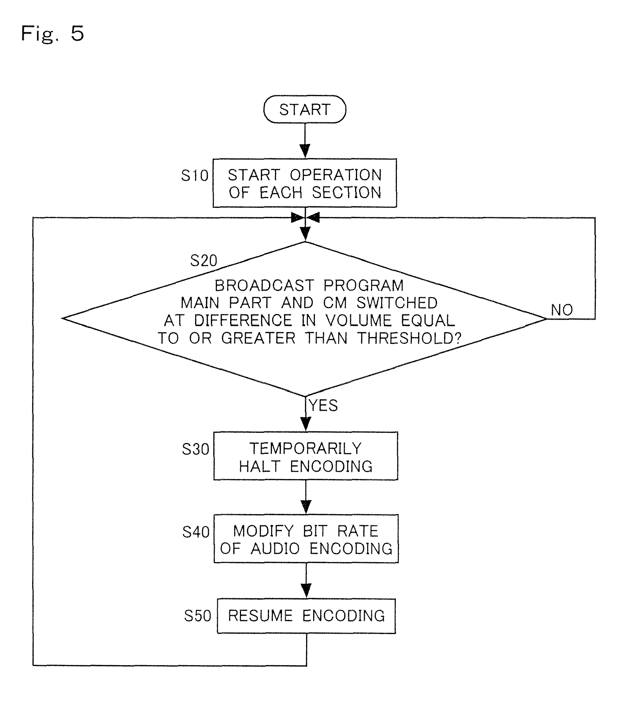

Next, an example of operation of the video/audio processor 2 will be described with reference to the flowchart shown in Fig. 5.

When the video/audio processor 2 starts operation, each section of the video/audio processor 2 starts to operate (Step S10). In Step S20 which follows Step S10, a switch between the main part of a broadcast program (which is not limited to one sent from the digital tuner 1, and includes, for example, a broadcast program played back by the HDD recording/playback section 5 or the optical disc recording/playback section 6) and a CM is detected; and additionally a determination as made as to whether the difference in volume between the main part and the CM is equal to or greater than a threshold. The agent that makes the determination may be, for example, the controller 7, which performs the determination in question based on information outputted by the video/audio processor 2, and sends the result of the determination to the video/audio processor 2; or a controller (not shown) disposed in the video/audio processor 2, and that controls the entire video/audio processor 2. As a method for detecting a switch between the main part and a CM, there may be cited, for example, a method in which the audio signal outputted by the audio decoder is employed to detect the volume, designating an interval of loud volume as a CM, and an interval of soft volume as the main part.

In a case in which a switch between the main part of a broadcast program and a CM has not been detected, or in a case in which a switch between the main part of a broadcast program and a CM has been detected, but the difference in volume between the main part and the CM is less than the threshold (NO in Step S20), the system returns to Step S20, and continues the aforementioned determination process.

On the other hand, in a case in which a switch between the main part of a broadcast program and a CM has been detected, and moreover the difference in volume between the main part and the CM is equal to or greater than the threshold (YES in Step S20), the encoder 105 or 108 temporarily halts encoding (Step S30). For the purpose of entry into this temporary halt operation, optionally, a buffer memory or the like may be furnished in an earlier stage from the encoder 105 or 108.

In Step S40 which follows Step S30, the encoder 105 or 108 modifies the bit rate of audio encoding. When there has been a switch from the main part to a CM, the bit rate of audio encoding is modified such that that subsequent to modification is less than that prior to modification, whereas when there has been a switch from a CM to the main part, the bit rate of audio encoding is modified such that that subsequent to modification is greater than that prior to modification.

In Step S50 which follows Step S40, the encoder 105 or 108 resumes encoding, then returns to Step S20, and continues the aforementioned determination process.

In a case in which the encoder 105 or 108 has lowered the bit rate of audio encoding, the sound quality of the analog audio signal obtained by subsequent decoding may be poor, making it hard for the user to hear. Therefore the user may have the illusion that the volume is lower. Specifically, due to lowering of the bit rate of audio encoding by the encoder 105 or 108, it is possible for the volume to appear lower in illusory fashion, with no actual lowering of the volume.

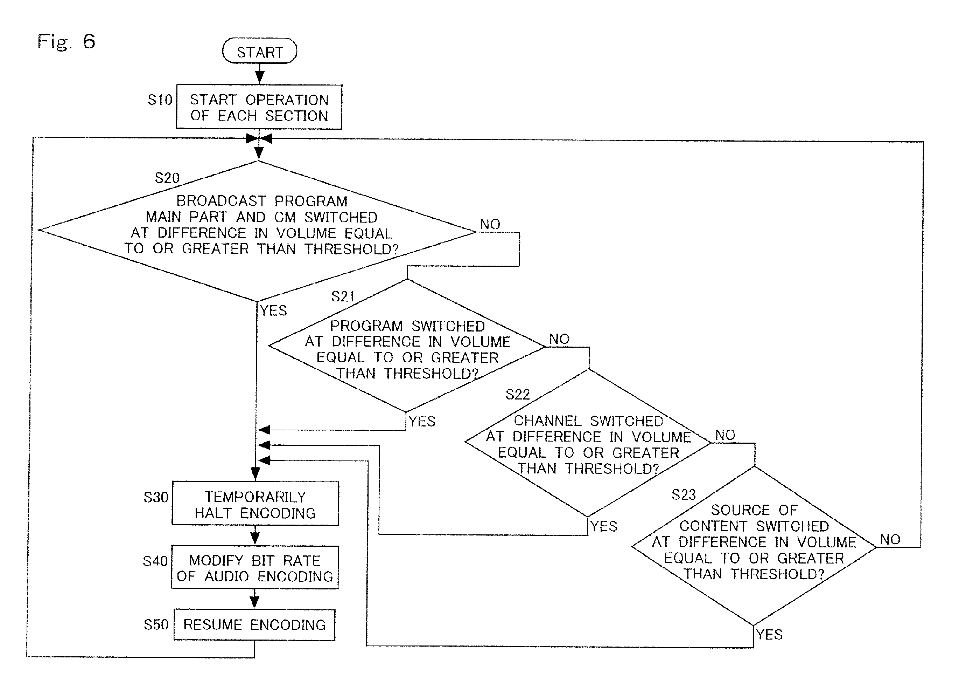

Moreover, large differences in volume occur not just between the main part of a broadcast program and CM, but in some cases may occur between different broadcast programs, between different channels, between different sources of content (for example, between a non-external input system and an external input system, or between a terrestrial digital broadcast and a satellite digital broadcast, etc.). For this reason, the video/audio processor 2 may be designed to perform the operation shown in Fig. 6, for example. In the flowchart shown in Fig. 6, Steps S21 to S23 have been added to the flowchart shown in Fig. 5.

In the flowchart shown in Fig. 6, a case in which no switch between the main part of a broadcast program and a CM has been detected, or in a case in which a switch between the main part of a broadcast program and a CM has been detected, but the difference in volume between the main part and the CM is less than the threshold (NO in Step S20), the system proceeds to Step S21. In a case in which a switch between the main part of a broadcast program and a CM has been detected, and moreover the difference in volume between the main part and the CM is equal to or greater than the threshold (YES in Step S20), the system proceeds to Step S30, in the same way as in the flowchart shown in Fig. 5.

In Step S21, a switch from one broadcast program to another broadcast program is detected, and a determination is made as to whether the difference in volume between the one broadcast program and the other broadcast program is equal to or greater than a threshold. The agent that makes the determination of Step S21 may be, for example, the controller 7, which employs EPG or the like to perform the determination, and sends the result of the determination to the video/audio processor 2.

In a case in which a switch from one broadcast program to another broadcast program has not been detected, or in a case in which a switch from one broadcast program to another broadcast program has been detected, but the difference in volume between the one broadcast program and the other broadcast program is less than the threshold (NO in Step S21), the system proceeds to Step S22. On the other hand, in a case in which a switch from one broadcast program to another broadcast program has been detected, and moreover the difference in volume between the one broadcast program and the other broadcast program is equal to or greater than the threshold (YES in Step S21), the system proceeds to Step S30.

In Step S22, a switch from one channel to another channel is detected, and a determination is made as to whether the difference in volume between the one channel and the other channel is equal to or greater than a threshold. The agent that makes the determination of Step S22 may be, for example, the controller 7, which performs the determination from an ascertained selection state, and sends the result of the determination to the video/audio processor 2.

In a case in which a switch from one channel to another channel has not been detected, or in a case in which a switch from one channel to another channel has been detected, but the difference in volume between the one channel and the other channel is less than the threshold (NO in Step S22), the system proceeds to Step S23. On the other hand, in a case in which a switch from one channel to another channel has been detected, and moreover the difference in volume between the one channel and the other channel is equal to or greater than the threshold (YES in Step S22), the system proceeds to Step S30.

In Step S23, a switch from one source of content to another source of content is detected, and a determination is made as to whether the difference in volume between the one source of content and the other source of content is equal to or greater than a threshold. The agent that makes the determination of Step S23 may be, for example, the controller 7, which performs the determination from an ascertained content source, and sends the result of the determination to the video/audio processor 2.

In a case in which a switch from one source of content to another source of content has not been detected, or in a case in which a switch from one source of content to another source of content has been detected, but the difference in volume between the one source of content and the other source of content is less than the threshold (NO in Step S23), the system returns to Step S20. On the other hand, in a case in which a switch from one source of content to another source of content has been detected, and moreover the difference in volume between the one source of content and the other source of content is equal to or greater than the threshold (YES in Step S23), the system proceeds to Step S30.

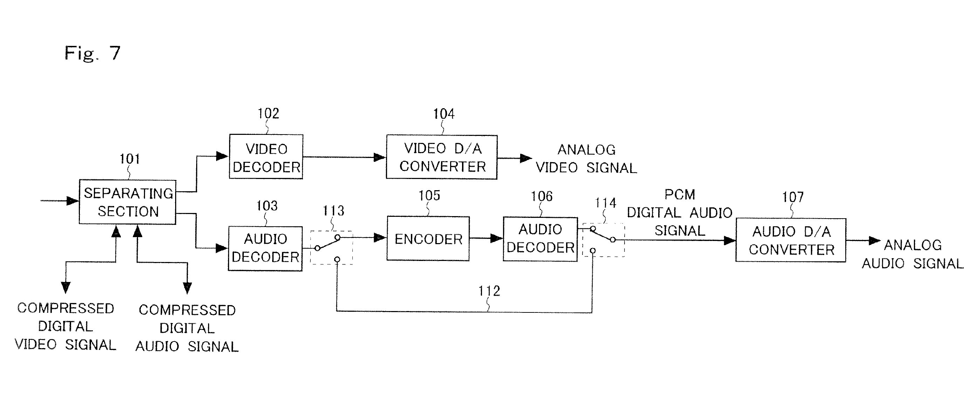

Next, a video/audio processor 2 having a bypass route will be described. Whereas the configuration of the video/audio processor 2 discussed previously (see Figs. 2 to 4) is one that does not have a bypass route, a configuration having a bypass route 112, as shown in Fig. 7, is also possible. The configuration of the video/audio processor 2 shown in Fig. 7 is equivalent to the configuration shown in Fig. 2, but with the addition of the bypass route 112 and switches 113 and 114. The switch 113 alternately selects between the encoder 105 and the bypass route 112, and supplies the selected one with the PCM digital audio signal outputted by the audio decoder 103. The switch 114 alternately selects between the audio decoder 106 and the bypass route 112, and supplies the PCM digital audio signal outputted by the selected one to the audio D/A converter 107. With the configuration shown in Fig. 7, it is acceptable for the encoder 105 to not be able to modify the bit rate of audio encoding.

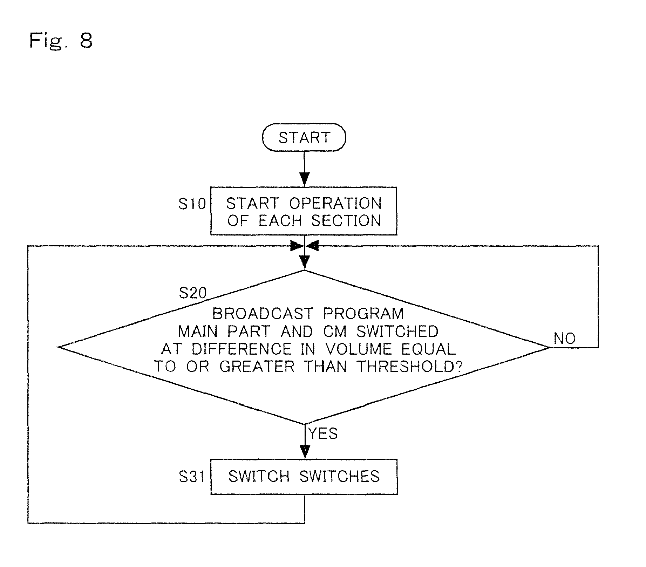

Next, an example of operation of the video/audio processor 2 shown in Fig. 7, which is a video/audio processor 2 having a bypass route, will be described with reference to the flowchart shown in Fig. 8.

Steps S 10 and S20 are analogous to those in the flowchart shown in Fig. 5, and therefore a detailed description thereof is omitted.

In a case in which no switch between the main part of a broadcast program and a CM has been detected, or in a case in which a switch between the main part of a broadcast program and a CM has been detected, but the difference in volume between the main part and the CM is less than the threshold (NO in Step S20), the system returns to Step S20.

On the other hand, in a case in which a switch between the main part of a broadcast program and a CM has been detected, and moreover the difference in volume between the main part and the CM is equal to or greater than the threshold (YES in Step S20), the switches 113 and 114 perform selective switching (Step S31), and thereafter return to Step S20. In a case of a switch from the main part of a broadcast program to a CM, the switch 113 switches from the bypass route 112 and selects the encoder 105, and the switch 114 switches from the bypass route 112 and selects the audio decoder 106. Conversely, in a case of a switch from a CM of a broadcast program to the main part, the switch 113 switches from the encoder 105 and selects the bypass route 112, and the switch 114 switches from the audio decoder 106 and selects the bypass route 112.

In a case in which the switches 113 and 114 have not selected bypass route 112, the sound quality of the analog audio signal may be poor due to degraded quality associated with audio encoding by the encoder 105, and making it hard for the user to hear. Therefore the user may have the illusion that the volume is lower. Specifically, it is possible for the volume to appear lower in illusory fashion, with no actual lowering of the volume.

While the present invention has been described in terms of the presently preferred embodiments, the present invention is not limited thereto, and addition of various modifications can be carried out without departing from the spirit of the invention.

For example, a modification analogous to the modification from Fig. 2 to Fig. 7 can be performed on Fig. 3 or Fig. 4. A modification analogous to the modification from Fig. 5 to Fig. 6 can be performed on Fig. 8. It is possible to eliminate any one or two steps among Steps S21 to 23 from Fig. 6.

Rather than providing the HDD-equipped optical disc recorder with a video D/A converter and audio D/A converter, it would be acceptable to instead provide a video D/A converter and audio D/A converter connected to output terminals of the HDD-equipped optical disc recorder.

Additionally, the present invention can be implemented in a digital broadcast reception device other than an HDD-equipped optical disc recorder (for example, a TV receiver).

## Claims

1. A digital broadcast reception device (100) provided with a first audio decoder (103) for expanding and outputting a compressed digital audio signal included in a transport stream of a received digital broadcast; the digital broadcast reception device comprising:
an encoder (105, 108) for encoding at least the digital audio signal outputted by the first audio decoder (103); and
a second audio decoder (106, 110) for decoding the compressed digital audio signal outputted by the encoder (105, 108).

2. The digital broadcast reception device (100) of claim 1,
further comprising an audio D/A convertor (107) for D/A conversion of the digital audio signal outputted by the second audio decoder (106), and outputting an analog audio signal.

3. The digital broadcast reception device (100) of claim 1 or claim 2,
the encoder (105, 108) being an encoder that can modify the bit rate of audio encoding.

4. The digital broadcast reception device (100) of claim 3,
the encoder (105, 108) modifying the bit rate of audio encoding so that the bit rate subsequent to modification is less than the bit rate prior to modification in a case in which a switch from a main part of a broadcast program to a commercial has been detected, and a difference in volume between the main part and the commercial is equal to or greater than a threshold,.

5. The digital broadcast reception device (100) of claim 1 or 2,
further comprising a bypass route (112) for bypassing the encoder (105, 108) and the second audio decoder (106).

6. The digital broadcast reception device of claim 5,
the bypass route (112) being switched from a state of use to a state of non-use in a case in which a switch from a main part of a broadcast program to a commercial has been detected, and a difference in volume between the main part and the commercial is equal to or greater than a threshold.
